# FASCICULE DE BREVET EUROPEEN

(11) **EP 3 674 941 B1**
(45) Date de publication et mention de la délivrance du brevet: **22.10.2025**
(21) Numéro de dépôt: 19219571.7
(22) Date de dépôt: 23.12.2019
(51) Int. Cl.: H04L 9/40, G06F 9/445, G06F 21/53, G06F 21/57, G06F 21/62, G06F 21/12, G06F 9/48, G06F 9/50

(54) **PROCÉDÉ DE FABRICATION D'UNE APPLICATION MATÉRIELLE METIER SPECIFIQUE SECURISÉE ET MODULAIRE ET SYSTÈME D'EXPLOITATION ASSOCIÉ**
HERSTELLUNGSVERFAHREN EINER GESICHERTEN BERUFSSPEZIFISCHEN HARDWARE-ANWENDUNG, UND ENTSPRECHENDES BETRIEBSSYSTEM
METHOD FOR MANUFACTURING A SPECIFIC SECURE AND MODULAR BUSINESS MATERIAL APPLICATION AND ASSOCIATED OPERATING SYSTEM

(30) Priorité: 27.12.2018 FR 1874267
(43) Date de publication de la demande: 01.07.2020
(73) Titulaire: Bull SAS, 78340 Les Clayes-sous-Bois (FR)
(72) Inventeur: CRETI, Luc, 95870 BEZONS (FR); NGO, Albert, 95870 BEZONS (FR); TRONCHE, Dominique, 95870 BEZONS (FR)
(74) Mandataire: Plasseraud IP

(56) Documents cités:
- WO-A1-2017/192415
- US-A1- 2016 219 073
- US-A1- 2018 198 824
- US-A1- 2018 247 064

## Description

### DOMAINE DE L'INVENTION

L'invention concerne le domaine des procédés de fabrication d'une application matérielle métier spécifique sécurisée et modulaire, ainsi que le domaine des systèmes d'exploitation qui sont aptes à gérer des containers de manière générique et minimaliste et qui sont destinés à être utilisés dans un procédé de fabrication d'une application matérielle métier spécifique sécurisée et modulaire.

### ARRIERE PLAN TECHNOLOGIQUE DE L'INVENTION

Une Application matérielle informatique est un dispositif physique destiné à rendre un ou plusieurs services informatiques dédiés de manière autonome.

Une Application matérielle comprend usuellement dans son périmètre les éléments suivants : un ordinateur (matériel), un système d'exploitation et un ensemble de logiciels « métiers » c'est-à-dire spécifiques aux services informatiques de l'application métier spécifique envisagée.

La configuration matérielle de l'ordinateur faisant partie de l'application matérielle dépend des ressources nécessaires pour mettre en œuvre les tâches métier. On trouvera généralement les éléments suivants : un ou plusieurs microprocesseurs, de la mémoire « vive » RAM, de la mémoire de stockage persistante (disque dur magnétique ou SSD), une ou plusieurs interfaces réseau.

Cet ordinateur peut également contenir des composants matériels développés spécifiquement par son fabricant pour participer à la réalisation des tâches métiers. L'adjonction de tels composants offre alors une différenciation matérielle importante du produit par rapport à une solution basée sur les composants standard disponibles sur le marché.

Contrairement aux systèmes informatiques ouverts une application matérielle est prévue pour exécuter une tâche (ou un ensemble de tâches connexes) dédiée. Elle est donc conçue pour ne pas être modifiable par adjonction de logiciels ou de matériels supplémentaires qui permettraient de réaliser des tâches additionnelles, elle est alors non extensible.

Un avantage intéressant des applications matérielles sur les systèmes informatiques « ouverts » est leur capacité à faciliter le déploiement de services informatiques. En effet, elles offrent leurs services métiers sous forme de solutions de types « clés en main (« Plug And Play » en langue anglaise) faciles à intégrer dans un système informatique complet.

Du fait de sa conception « monolithique », la fourniture d'un service sous forme d'application matérielle permet de faire disparaitre, pour son utilisateur, les contraintes suivantes qui se posent lorsque le service est proposé sur un système ouvert : le choix et dimensionnement du matériel destiné à héberger le service, le choix, l'installation et la configuration du système d'exploitation sur le matériel choisi, l'installation du logiciel fournissant les services métiers, la résolution de des problèmes de compatibilité intervenant à chacun des niveaux, la sécurisation de l'ensemble (protections matérielles et logicielles). Le temps et la facilité de déploiement sont donc grandement améliorés par la fourniture d'un service informatique sous forme d'application matérielle.

Le niveau d'expertise en informatique requis, de la part de l'utilisateur, de ces solutions est également réduit car l'application matérielle fait disparaitre cette complexité, la reportant entièrement sur le fabriquant du dispositif.

Le développement de la partie matérielle d'une application matérielle est une activité complexe et couteuse nécessitant des compétences dans divers domaines du design matériel (« hardware » en langue anglaise) concernant des domaines aussi divers que la conception de cartes électroniques ou la conception du boitier. Tout éditeur informatique désirant proposer ses solutions sous forme d'application matérielle ne dispose pas nécessairement des compétences et des ressources nécessaires pour développer cette partie matérielle. Dans ce cas de figure l'éditeur se tourne vers un fournisseur de type OEM proposant un matériel correspondant aux besoins de sa solution.

Lorsque le matériel fourni contient des périphériques propriétaires au fabricant, les éléments logiciels requis pour interagir avec ces périphériques ne sont pas intégrés dans les systèmes d'exploitation courants ni même disponibles en téléchargement sur internet comme c'est le cas pour les périphériques standards. Dans ce cas, le fabriquant du matériel livre avec celui-ci des logiciels (drivers système et librairies) afin de permettre aux développeurs d'applications d'interagir avec ces périphériques propriétaires. L'ensemble de ces éléments logiciels est un kit de développement d'applications encore dénommé SDK (« Software Development Kit » en langue anglais).

Dans le monde du développement d'applications informatiques, les architectures de type micro services sont un style d'architecture logicielle à partir duquel un ensemble complexe d'applications est décomposé en plusieurs processus (micro services) indépendants et faiblement couplés, souvent spécialisés dans une seule tâche. Cette architecture s'oppose à l'architecture monolithique dans laquelle les mêmes services informatiques seraient rendus par un seul processus complexe en charge de la totalité du service.

Les avantages des architectures en micro services par rapport aux architectures monolithiques sont : l'amélioration de la maintenabilité de l'application, la réutilisabilité de certains services, l'amélioration de la résilience globale du système, l'amélioration de l'adaptabilité de l'application à l'évolution des besoins. Une règle de la conception des micros services est la séparation des responsabilités des services composant l'application. Chaque service étant conçu pour effectuer une tâche et une seule avec la meilleure qualité de service possible.

De ce qui précède, il ressort clairement, et c'est là une part importante de leur valeur ajoutée, que les solutions de type application matérielle reportent une grande partie de la complexité de mise en œuvre depuis l'utilisateur de la solution vers le fabriquant de l'application matérielle. Plus particulièrement, concernant le système d'exploitation de l'application matérielle, les tâches suivantes doivent être réalisées : le choix du système d'exploitation, le choix des composants du système à installer, la construction éventuelle du système, la configuration par défaut du système, l'optimisation des performances, la sécurisation (durcissement), la conception et réalisation des procédures d'installation, la conception et réalisation des procédures de mise à jour, l'industrialisation de l'ensemble. La réalisation de ces tâches nécessite un investissement important en temps et en matériel.

De plus, cette activité nécessite un niveau d'expertise élevé dans des domaines de compétence souvent sans rapport directs avec ceux nécessaires pour produire les logiciels « métiers » devant être installés dans l'application matérielle. Cela signifie qu'un acteur spécialiste d'un domaine d'activité bien spécifique et expert en son domaine désireux de produire une application matérielle pour délivrer son savoir-faire sous ce format, ne dispose pas nécessairement des experts et de l'infrastructure matérielle requis pour réaliser la production du système d'exploitation de son application matérielle.

En outre, lorsque la fourniture du matériel est réalisée en mode OEM, cette tache risquée, critique, et couteuse doit être réalisée par chaque fabriquant d'application matérielle basée sur un matériel OEM donné. Il pourrait donc être intéressant pour le fournisseur du matériel OEM, de livrer en plus du SDK usuel, un système d'exploitation (ou socle) adapté au matériel qu'il fournit.

La présente invention sera plus particulièrement appliquée aux systèmes d'exploitation supportant des technologies de type containeurs dont « Linux » et « FreeBSD » sans que cette liste soit limitative.

Pour le fournisseur OEM, cette approche faciliterait l'adoption de sa solution par ses clients dans l'incapacité de développer par eux même le système d'exploitation faute des ressources requises. Pour les clients, cette approche serait l'assurance de disposer d'un système d'exploitation à l'état de l'art en termes de fonctionnalités, de robustesse et de sécurité dont le fournisseur OEM garantirait l'adéquation avec le matériel fourni, et ce sans recourir à des développements complexes.

Les coûts associés à la production de ce socle seraient ainsi mutualisés entre les différents clients du fournisseur OEM, au lieu d'être répliqués chez chaque client, permettant avec des coûts raisonnables d'obtenir un produit de qualité malgré le niveau d'expertise élevé requis pour le produire. Les profits engendrés par économies ainsi réalisées étant à répartir entre le client et le fournisseur OEM selon des modalités à définir en fonction des marchés.

La fourniture d'un socle associé à un matériel donné en mode OEM n'est cependant pas une pratique courante. Un verrou technique important rendant difficile la mise en œuvre de la fourniture d'un socle par un fournisseur OEM est le fait que, dans une architecture classique, les choix techniques réalisés lors de toutes les étapes de la fabrication du socle ont un impact sur sa capacité à accueillir les applications métier et que ces choix techniques sont difficiles à modifier après la production du socle.

En particulier, lors de la conception du socle, si on veut pouvoir atteindre un bon niveau de sécurité, il faut veiller à n'introduire dans le socle que le strict minimum des composants logiciels nécessaires. Dans une démarche plus aboutie encore, on peut envisager de modifier ces composants eux-mêmes afin de supprimer ou de désactiver certaines fonctions non nécessaires de ces composants. Le but de cette démarche « minimaliste » est de diminuer la surface d'attaque du socle, c'est-à-dire le nombre de points d'entrée qu'un agent menaçant pourra mettre à profit pour mener des actions malveillantes.

Bien que l'on puisse techniquement envisager de construire un socle à partir d'une distribution existante d'un système d'exploitation, en supprimant les éléments non nécessaires, cette démarche de haut en bas (« Top/Down » en langue anglaise) est plutôt à éviter pour obtenir un résultat de qualité, car il serait alors beaucoup plus difficile, à cause de l'intrication des dépendances des différents composants entre eux, de supprimer l'ensemble des composants inutiles. La meilleure démarche consiste en l'application d'une méthode de bas en haut (« Bottom/Up » en langue anglaise) dans laquelle on part d'un système composé du seul noyau auquel on ajoute unitairement les composants logiciels nécessaire au fonctionnement du système.

Pour résumer la problématique, il faut garder à l'esprit que, dans le cas de notre socle construit selon l'approche de bas en haut, l'ajout de composants logiciels supplémentaires nécessite de disposer de l'environnement technique et humain, à savoir ordinateurs, logiciels et experts permettant de produire le socle. Cette approche nuirait à l'objectif de réduire la complexité pour les éditeurs d'application matérielle. Il en résulte que tous les composants logiciels nécessaires au fonctionnement de l'application matérielle et à l'accueil des logiciels métiers doivent avoir été inclus dès la production du socle qui se trouve ainsi, figé dans son contenu fonctionnel dès sa fabrication.

Cependant l'accueil des composants métiers peut nécessiter l'adjonction de composants dans le socle afin d'assurer leur fonctionnement. Or, il s'agit de proposer un socle convenable pour l'utilisation du matériel fourni par le producteur de la solution OEM sans préjuger ni des applications métier qui vont être amenées à s'exécuter sur l'application matérielle ni des technologies sur lesquelles elles vont reposer.

Si ces applications sont basées sur un langage compilé, il faudra fournir, en plus du socle, l'ensemble des outils nécessaires pour compiler des programmes capables de s'exécuter sur le socle. Si ces applications sont basées sur des langages interprétés, elles auront besoin de l'environnement lié à la technologie qu'elles utilisent. Ces technologies sont nombreuses : Java, Python, Ruby, Perl, PHP, NodeJS par exemple.

La suppression a postériori de composants logiciels surnuméraires ajoutés à un socle bâti sur la démarche de bas en haut est vouée toutefois à certains problèmes communs avec le cas de l'approche de haut en bas. En effet, l'ensemble de ces facteurs conduit à une sorte de dilemme :
➢ soit on souhaite rendre le socle très polyvalent, on doit ajouter un grand nombre de composants logiciels, on augmente ainsi sa surface d'attaque le rendant ainsi potentiellement plus vulnérable,
➢ soit on construit un socle avec peu de composants donc à faible surface d'attaque mais on restreint les applications métier qu'il est capable d'accueillir diminuant ainsi sa polyvalence et donc son attractivité vis-à-vis de ses clients potentiels.

Un autre problème posé par un socle très polyvalent est l'espace de stockage qu'il va occuper qui grossira à mesure que des composants logiciels lui sont ajoutés. En effet, l'espace de stockage persistant disponible dans une application matérielle peut être assez limitée, la taille de la mémoire vive de celle-ci l'étant davantage encore.

Or, le système d'exploitation sera souvent, dans le cas d'une application matérielle, déployé sous la forme d'un système de fichier en mémoire comme c'est souvent le cas dans le monde du logiciel embarqué. La limitation de l'espace mémoire utilisé est donc un élément important d'autant plus qu'une application matérielle est un système fermé dans lequel il n'est pas prévu de pouvoir rajouter des espaces de stockages persistants ou non supplémentaires. En outre, ces deux types d'occupation mémoire se font au détriment de la place disponible pour les applications métier diminuent fortement l'intérêt de la solution si la place disponible devient trop restreinte.

Il s'agit donc de permettre la fourniture d'un socle au nombre de composants logiciels « minimal » (pour les raisons évoquées ci-dessus) et néanmoins capable d'accueillir une grande diversité d'applications métier réalisés avec de technologies variées et non connues à l'avance afin de convenir au plus grand nombre d'utilisateurs possibles. Afin d'améliorer encore l'attractivité de cette solution, le déploiement des applications métier sur ce socle devra être facile à mettre en œuvre afin d'offrir des temps de développements courts pour la production d'application matérielle basées sur cette solution.

Certains arts antérieurs ont essayé de proposer des solutions partielles aux différents problèmes évoqués ci-dessus.

La conception d'un système d'exploitation par l'approche de haut en bas pourrait résoudre le problème posé mais, outre les problèmes conceptuels de sécurité inhérents à cette approche déjà évoqués ci-dessus, cette technique n'offre pas d'isolation des services métiers entre eux ni par rapport au système d'exploitation ce qui d'un point de vue de la sécurité n'est pas optimal.

Une autre solution pourrait être d'utiliser un système d'exploitation minimal durci contenant d'un hyperviseur permettant de déployer des machines virtuelles « banalisées ». Les composants logiciels métiers pourraient alors être déployés dans des machines virtuelles. Cette approche permettrait d'obtenir : la généricité de la solution car le système d'exploitation serait agnostique par rapport aux machines virtuelles qu'il héberge, l'indépendance de l'environnement d'exécution des services métiers par rapport au système d'exploitation sous-jacent, l'indépendance de l'environnement d'exécution des services métiers entre eux.

Du point de vue de la sécurité du système, il s'agit probablement d'une bonne solution envisageable du point de vue de la maximalisation de la sécurité. Car un système de virtualisation à l'état de l'art fournit un niveau d'isolation des machines virtuelles entre elles et vis à vis du système d'exploitation de bonne qualité.

Du point de vue de la généricité de la solution, il s'agit probablement encore une fois d'une bonne solution envisageable du point de vue de la maximalisation de la généricité, car la technologie de virtualisation permet de faire travailler des systèmes d'exploitation de types différents (Linux, Windows, FreeBSD) sur le même matériel simultanément.

L'utilisation de la technologie de virtualisation permet donc la gestion simultanée d'environnements d'exécution très variés.

Cependant, cette solution souffre d'inconvénients importants notamment pour sa mise en œuvre dans le cadre d'une application matérielle. Ces inconvénients sont notamment :
➢ un temps de démarrage des machines virtuelles important. En effet démarrer une machine virtuelle est l'équivalent de démarrer une machine physique avec l'ensemble des phases du processus de démarrage à exécuter. Ce temps de démarrage retarde de manière conséquente le temps nécessaire à obtenir la disponibilité des services métier en cas de redémarrage de l'application matérielle,
➢ une consommation de ressources importantes. Les machines virtuelles nécessitant l'exécution d'un système d'exploitation complet, la consommation de ressources en termes d'utilisation mémoire et de puissance de calcul est augmentée par rapport au cas où les applications s'exécuteraient directement dans le système d'exploitation sous-jacent. Ce point est particulièrement sensible dans le cas d'applications matérielles car, s'agissant de systèmes fermés, l'adjonction de mémoire ou de processeur n'est pas envisageable,
➢ pour les mêmes raisons que précédemment évoquées, la consommation d'espace disque de la solution à base de machines virtuelles est également augmentée dans des proportions considérables,
➢ le mise en boîtier (« packaging » en langue anglaise) des applications métiers sous forme de machines virtuelle est une opération consommatrice de temps et nécessite de mettre en place des processus d'intégration complexes.
➢ bien qu'il s'améliore progressivement, le support des périphériques USB au travers des solutions de virtualisation reste aujourd'hui problématique ce qui peut poser des problèmes si les applications métier doivent accéder à des périphériques USB de l'application matérielle.
➢ enfin, les solutions de virtualisation supportent très mal les périphériques d'extensions non « standard » tels que les cartes PCI express ou autres matériels dédié. En général, de tels périphériques ne sont pas utilisables par les machines virtuelles. Or dans le cas d'une application matérielle, il n'est pas rare d'avoir à gérer ce genre de dispositif matériel.

Par conséquent, si la solution à base d'hyperviseur permet d'adresser de manière plutôt satisfaisante certains aspects du problème posé notamment les aspects sécurité et modularité, des inconvénients importants, pour une utilisation dans le domaine des applications matérielles subsistent et font que cette solution est relativement peu pratique à mettre en œuvre. De plus une telle solution risque d'être finalement assez peu attractive pour d'éventuels clients, en raison de la complexité résiduelle importante de la tâche d'adaptation des applications métier. Le document US2018/198824 est considéré comme étant pertinent dans le domaine de gestion de conteneurs dans des systèmes à applications dédiées.

### OBJETS DE L'INVENTION

L'invention est définie dans les revendications indépendantes.

Le but de la présente invention est de fournir un procédé de fabrication d'une application matérielle métier spécifique sécurisée et modulaire palliant au moins partiellement les inconvénients précités.

Par définition, une application matérielle métier est spécifique et dédiée à un service informatique bien particulier. Un double problème de sécurité et de généricité assez contradictoire, proche d'un véritable dilemme, doit alors être résolu. En effet, si la solution proposée pour fabriquer cette application matérielle métier spécifique n'est pas assez sécurisée, sa vulnérabilité empêchera l'ensemble des clients potentiels de la trouver attractive, tandis qu'au contraire, si elle n'est pas assez générique, sa trop grande spécificité empêchera la plupart des clients potentiels de la trouver attractive. Ainsi, deux familles de stratégies à priori opposées existent pour fabriquer cette application matérielle métier spécifique :
➢ la stratégie complètement dédiée, avec un nombre restreint de constituants logiciels exclusivement focalisés sur le besoin présent, qui offre une bonne sécurité mais une généricité insuffisante, car la surface d'attaque est réduite mais la plateforme de services est figée,
➢ la stratégie polyvalente, avec un nombre restreint de constituants logiciels pour anticiper les nombreuses évolutions potentielles, qui offre une bonne généricité mais une sécurité insuffisante, car la surface d'attaque est élevée tandis que la plateforme de services reste évolutive.

L'invention propose d'améliorer ce compromis, en utilisant une stratégie plutôt polyvalente, pour assurer la généricité, mais en assurant également la sécurité par la mise en œuvre de cette stratégie polyvalente à un niveau intrinsèquement plus sécurisé que le niveau des machines virtuelles qui pourrait être spontanément envisagé, à savoir le niveau des containers lequel offre intrinsèquement un niveau de cloisonnement entre composants logiciels métiers légèrement inférieur mais encore très satisfaisant tout en requérant bien moins de ressources matérielles et logicielles, et bien moins de temps pour mettre en œuvre ces ressources matérielles et logicielles.

Ce léger sacrifice en termes de sécurité est :
➢ d'une part largement contrebalancé par le gain en réduction de ressources matérielles et logicielles ainsi que par le gain en réduction de temps de lancement et de mise en œuvre de ces ressources matérielles et logicielles,
➢ et d'autre part partiellement compensé par l'utilisation d'un système fermé non extensible isolé de l'extérieur, lequel système fermé, malgré sa taille souvent réduite par rapport à un serveur habituel, supporte très bien le déploiement des containers, notamment grâce à la rationalisation de son système d'exploitation.

Pour cela, l'invention, en plus de l'ordinateur matériel et du kit de développement d'applications, offre, au fabriquant d'une application matérielle métier spécifique sur la base de composants logiciels métiers, également un système d'exploitation qui est apte à gérer des containers de manière générique et minimaliste, ainsi que des modèles de containers permettant d'instancier les composants logiciels métiers dans ces containers.

Préférentiellement, ce système d'exploitation est réduit à un noyau minimum de fonctions essentielles assurant la gestion sécurisée des containers tout en maintenant leur généricité.

Cette démarche est le juste milieu et le bon compromis entre d'une part l'absence totale de système d'exploitation fourni au fabricant d'application matérielle métier spécifique, ce qui est la majorité des cas, requérant ainsi de sa part beaucoup de compétences et d'énergie pour le créer, et d'autre part la fourniture d'un système « clés en main » (« plug and play » en langue anglaise) permettant un emploi plus aisé mais au prix d'une spécificité élevée empêchant ou réduisant notablement l'évolutivité de l'application matérielle métier spécifique ainsi fabriquée.

L'invention propose donc d'une part l'adjonction d'un système d'exploitation mais lequel reste générique (pour la généricité) et minimaliste (pour la sécurité), et d'autre part la distribution des composants logiciels métiers à un niveau de virtualisation de containers plutôt qu'à un niveau de virtualisation de machines virtuelles, ce niveau de containers présentant le double avantage d'un cloisonnement intrinsèque encore très satisfaisant quoique légèrement inférieur conservant un bon niveau de sécurité et d'un besoin bien moindre en ressources matérielles et logicielles pour fonctionner, ainsi qu'une souplesse et une rapidité notablement supérieures, l'intégration dans un boîtier fermé l'isolant complètement de l'extérieur (on ne peut pas ouvrir physiquement le boîtier sans endommager le fonctionnement de l'application matérielle métier spécifique) compensant au moins en partie le léger sacrifice de sécurité, du reste largement compensé par le gain drastique en réduction de ressources et en temps de lancement et de mise en œuvre de ces ressources.

A cette fin, la présente invention propose un procédé de fabrication d'une application matérielle métier spécifique sécurisée et modulaire, comprenant : une étape de sélection : d'un ordinateur matériel intégré dans un boîtier fermé qui l'isole de l'extérieur de manière à rendre les ressources matérielles de cet ordinateur matériel structurellement non extensibles car rendues inaccessibles sans endommagement depuis l'extérieur du boîtier, d'un système d'exploitation à gérer des containers de manière générique et minimaliste, associé à l'ordinateur, d'un kit de développement d'applications, associé au système d'exploitation et à l'ordinateur, des modèles de containers, des composants logiciels métiers spécifiques, une étape de déploiement des composants logiciels métiers spécifiques dans des containers instanciés sur la base des modèles de containers.

A cette fin, la présente invention propose également un système d'exploitation, apte à gérer des containers de manière générique et minimaliste, destiné à être utilisé dans un procédé de fabrication d'une application matérielle métier spécifique sécurisée et modulaire, caractérisé en ce qu'il comprend : un mécanisme générique de gestion d'un nombre non prédéterminé de containers, comprenant : une fonction d'installation des modèles de containers, une fonction de mise à jour des modèles de containers, une fonction de création d'un container par instanciation d'un modèle de container, une fonction de démarrage d'un container, une fonction d'arrêt d'un container, une fonction de destruction d'un container, un mécanisme de configuration dudit mécanisme générique de gestion des containers, apte à configurer: la liste des containers à gérer, l'ensemble des composants additionnels requis pour le fonctionnement des containers à gérer.

Un élément important selon des modes de réalisation de l'invention décrite consiste, pour un fournisseur de matériel destiné à la fabrication d'application matérielle, à fournir en plus de son matériel, un système d'exploitation comprenant les éléments suivants :
- le strict minimum en termes de composants logiciels permettant d'installer d'initialiser, de mettre à jour et de faire fonctionner un système d'exploitation et un système de gestion de containers,
- un mécanisme générique permettant de gérer, pour un nombre de containers arbitraires et inconnus à l'avance :
   ∘ l'installation et la mise à jour des modèles de containers,
   ∘ la création d'un container,
   ∘ le démarrage d'un container,
   ∘ l'arrêt d'un container,
   ∘ la destruction d'un container,
- un mécanisme de configuration du mécanisme de gestion décrit ci-dessus, configuration permettant, pour une application matérielle donnée, de configurer :
   ∘ la liste des containers devant être gérés,
   ∘ l'ensemble des éléments additionnels liés à ces containers (réseaux, volumes de donnée etc.),
- une configuration « durcie » de l'ensemble des logiciels faisant partie du système,
- optionnellement, des composants logiciels destinés à renforcer la sécurité du système,
- le cas échéant, l'ensemble des logiciels additionnels non standards nécessaire à utiliser le matériel spécifique inclus dans l'application matérielle,
- optionnellement, un ou plusieurs modèles de containers d'exemple ou de gestion destiné à faciliter l'exploitation du matériel spécifique de l'application matérielle ou l'écriture de futurs modèles de containers utilisant ce matériel.

Suivant des modes de réalisation préférés, l'invention comprend une ou plusieurs des caractéristiques suivantes qui peuvent être utilisées séparément ou en combinaison partielle entre elles ou en combinaison totale entre elles, avec l'un ou l'autre des objets de l'invention précités.

De préférence, le système d'exploitation, apte à gérer des containers de manière générique et minimaliste, comprend : un mécanisme générique de gestion d'un nombre non prédéterminé de containers, comprenant : une fonction d'installation des modèles de containers, une fonction de mise à jour des modèles de containers, une fonction de création d'un container par instanciation d'un modèle de container, une fonction de démarrage d'un container, une fonction d'arrêt d'un container, une fonction de destruction d'un container, un mécanisme de configuration dudit mécanisme générique de gestion des containers, apte à configurer : la liste des containers à gérer, l'ensemble des composants additionnels requis pour le fonctionnement des containers à gérer.

De préférence, ledit mécanisme générique de gestion des containers comprend uniquement : ladite fonction d'installation des modèles de containers, ladite fonction de mise à jour des modèles de containers, ladite fonction de création d'un container par instanciation d'un modèle de container, ladite fonction de démarrage d'un container, ladite fonction d'arrêt d'un container, ladite fonction de destruction d'un container.

De préférence, ledit mécanisme de configuration dudit mécanisme générique de gestion des containers, est apte à configurer uniquement : ladite liste des containers à gérer, ledit ensemble des composants additionnels requis pour le fonctionnement des containers à gérer.

De préférence, ledit ensemble des composants additionnels requis pour le fonctionnement des containers à gérer, comprend : des réseaux virtuels, et/ou des volumes de données, et/ou l'accès à des composants matériels métiers spécifiques avec les droits d'accès des différents containers auxdits composants.

De préférence, le nombre des composants logiciels formant ledit système d'exploitation est inférieur à 100 composants logiciels, et de préférence est compris entre 50 et 100 composants logiciels.

Ainsi, le système d'exploitation réalise un compromis optimal entre généricité d'une part et sécurité (par diminution de la surface d'attaque en réduisant le nombre de composants logiciels) d'autre part.

A titre de comparaison, un système classique de l'art antérieur comprend environ 900 composants logiciels, tandis qu'un système déjà considéré comme réduit et optimisé car plutôt focalisé sur les fonctions essentielles comprend encore environ 250 composants logiciels.

De préférence, ledit ordinateur matériel, intégré dans un boîtier fermé qui l'isole de l'extérieur de manière à rendre les ressources matérielles de cet ordinateur matériel structurellement non extensibles car rendues inaccessibles sans endommagement depuis l'extérieur du boîtier, inclut déjà le ou les composants matériels métiers spécifiques éventuels.

Ainsi, la sécurité du procédé de fabrication proposé est encore améliorée.

De préférence, le ou l'un des composants matériels métiers spécifiques est une carte cryptographique qui est avantageusement apte à réaliser / authentifier les signatures électroniques et/ou à réaliser des chiffrements / déchiffrements de données.

Ainsi, la sécurité du procédé de fabrication proposé est encore améliorée.

De préférence, ledit ordinateur matériel comprend au moins : un ou plusieurs microprocesseurs, une ou plusieurs mémoires vives, une ou plusieurs mémoires persistantes, une ou plusieurs interfaces réseau.

De préférence, la capacité globale de la ou des mémoires vives est comprise entre 5 et 30Go, de préférence comprise entre 10 et 20Go, et la capacité globale de la ou des mémoires persistantes est comprise entre 50 et 500Go, de préférence comprise entre 100 et 300Go.

De préférence, ledit déploiement des composants logiciels métiers spécifiques est organisé en une architecture de micro-services.

Ainsi, la généricité du procédé de fabrication proposé est encore améliorée.

De préférence, des composants logiciels additionnels de sécurité sont implémentés dans ledit système d'exploitation, et/ou des configurations spécifiques augmentant le niveau de sécurité sont implémentées dans ledit système d'exploitation.

Ainsi, la sécurité du procédé de fabrication proposé est encore améliorée.

De préférence, des matériels métiers dédiés sont implémentés dans l'application matérielle métier spécifique, des composants logiciels additionnels de pilotage des matériels métiers dédiés sont implémentés dans ledit système d'exploitation.

Ainsi, des fonctionnalités spécifiques supplémentaires peuvent être ajoutées sans réduire la généricité de manière substantielle.

De préférence, la configuration de toute la partie logicielle de l'application matérielle métier spécifique est durcie pour améliorer sa sécurité, et/ou la configuration du système d'exploitation est durcie pour améliorer sa sécurité.

Ainsi, la sécurité du procédé de fabrication proposé est encore améliorée.

De préférence, le système d'exploitation est un système d'exploitation Linux, le système de gestion des containers est le système Docker.

Ainsi, ce système d'exploitation et ce type de containers offre un compromis optimisé entre sécurité et généricité.

D'autres caractéristiques et avantages de l'invention apparaîtront à la lecture de la description qui suit d'un mode de réalisation préféré de l'invention, donnée à titre d'exemple et en référence aux dessins annexés.

### BREVE DESCRIPTION DES DESSINS

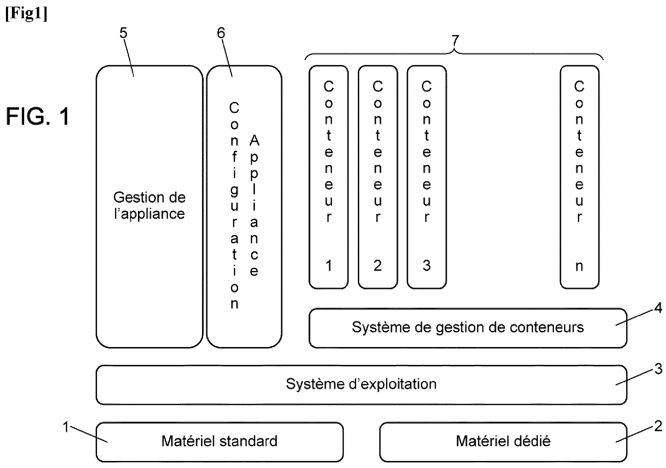

**[****Fig. 1****]** La figure 1 représente schématiquement un exemple de système informatique en schémas bloc pour mettre en œuvre le procédé de fabrication d'une application matérielle métier spécifique sécurisée et modulaire selon un mode de réalisation de l'invention.

### DESCRIPTION DETAILLEE DE L'INVENTION

La figure 1 représente schématiquement un exemple de système informatique en schémas bloc pour mettre en œuvre le procédé de fabrication d'une application matérielle métier spécifique sécurisée et modulaire selon un mode de réalisation de l'invention.

Le procédé de fabrication d'une application matérielle métier spécifique sécurisée et modulaire, comprend d'abord une étape de sélection puis une étape de déploiement.

Dans l'étape de sélection, sont sélectionnés plusieurs éléments parmi les éléments suivants. D'abord, il y a un ordinateur matériel intégré dans un boîtier fermé qui l'isole de l'extérieur de manière à rendre les ressources matérielles de cet ordinateur matériel structurellement non extensibles car rendues inaccessibles sans endommagement depuis l'extérieur du boîtier, ces ressources matérielles comprenant du matériel standard 1 et du matériel dédié au métier 2. Puis, il y a un système d'exploitation 3 qui est apte à gérer des containers 7 de manière générique et minimaliste, associé à l'ordinateur matériel 1 et 2, ce système d'exploitation 3 incluant un mécanisme 4 générique de gestion d'un nombre non prédéterminé de containers, ainsi qu'un mécanisme de configuration dudit mécanisme générique de gestion des containers. Ensuite, il y a un système de gestion 5 de l'application matérielle métier spécifique, un système de configuration 6 de l'application matérielle métier spécifique, ainsi qu'un kit de développement d'applications associé au système d'exploitation 3 et à l'ordinateur 1 et 2 (non représenté sur la figure 1), des modèles de containers 7, des composants logiciels métiers spécifiques aptes à piloter le matériel dédié 2.

Dans l'étape de déploiement, les composants logiciels métiers spécifiques sont déployés dans des containers 7 instanciés sur la base des modèles de containers 7.

En préalable à l'exposé des avantages de la solution, et de son adéquation à la résolution du problème posé, une brève introduction aux techniques de containerisation va d'abord être faite.

Un système de containerisation est comparable à un système de virtualisation qui serait très allégé.

Dans le cas d'un système de virtualisation, seules les ressources matérielles dont la mémoire vive, le processeur et le système de stockage permanent, sont mutualisées, l'ensemble des autres couches étant entièrement dupliquées entre chaque machine virtuelle.

Dans le cas d'un système de gestion de containers, la mutualisation inclut le noyau du système d'exploitation de la machine, l'isolation entre les différents containers étant réalisée par le noyau sous-jacent par le biais d'un système de droit basé sur des espaces de nommage.

La gestion de la mutualisation des ressources physiques est donc beaucoup plus optimisée dans les systèmes de gestion de containers car elle est assurée par un noyau unique, alors que, dans le cas de machines virtuelles, il y a autant de noyaux que de machines virtuelles.

Les containers peuvent ainsi être très allégés par rapport aux machines virtuelles car le nombre de composants nécessaire à leur fonctionnement se trouve très réduit.

Pour donner un ordre de grandeur de la quantité de logiciels mis en œuvre dans les deux technologies, un container basique aura une taille d'environ 5Mo là ou une machine virtuelle de capacité équivalente fera environ 200 Mo.

Les systèmes de containerisation peuvent également offrir des fonctionnalités de séparation des données persistantes permettant d'améliorer la résilience du système global en obligeant le développeur de l'application à séparer le stockage du code de l'application, de celui des données utilisateur.

Quand cette fonction est disponible, lorsqu'un container est détruit, puis recréé, l'ensemble des données du container sont effacées et un containeur « neuf » identique à son image de référence est créé. Dans ce modèle, pour assurer la persistance des données utilisateurs, il convient de créer des « volumes de données » et d'indiquer par configuration au système de gestion des containers que les données utilisateur vont être stockées dans ces volumes de données.

Les systèmes de gestion de containers proposent également la possibilité de gérer des réseaux « virtuels » permettant aux containers de communiquer entre eux, ces réseaux étant, sauf configuration contradictoire, confinés à la machine qui héberge le système d'exploitation et donc inaccessible depuis les interfaces réseaux physiques de la machine.

Cette isolation des réseaux virtuels, permet d'assurer des communications sûres entre les différents containers du système.

En première approximation, chaque container peut être comparé à un ensemble de processus regroupés sous un même espace de nommage et s'exécutant sous le contrôle du système d'exploitation sous-jacent. Il s'agit donc éléments « actifs » qui réalisent des traitements effectifs.

Les containers sont créés (ou instanciées) à partir de « modèles » (encore appelés « template » en langue anglaise) ou images qui contiennent l'ensemble des programmes et fichiers de données nécessaires à l'exécution des containers. Les images sont des éléments statiques et passifs qui ne réalisent aucun traitement effectif.

Il est possible d'exécuter plusieurs containers à partir de la même image.

Les images sont installées dans les systèmes de gestion des containers, soit par téléchargement depuis un serveur approprié faisant partie du système de containerisation, soit par un mécanisme d'importation/exportation de fichier d'archive contenant les images.

La solution proposée par des modes de réalisation de l'invention est structurellement semblable à la solution à base de machines virtuelles évoquées précédemment mais l'utilisation de containers en lieu et place des machines virtuelles offre des avantages qui rendent son application bien adaptée pour résoudre le problème posé par les systèmes de type application matérielle.

Le système d'exploitation sous-jacent est minimal puisqu'il ne contient que le strict minimum pour assurer son propre fonctionnement, celui du matériel dédié, ainsi que celui du système de gestion de conteneurs. L'objectif d'une surface d'attaque réduite est donc atteint.

Le système proposé est générique et pourra servir à décliner de nombreux types d'application matérielle avec le même matériel, car il ne fait aucune hypothèse sur le nombre ou la fonction des containers à déployer.

Dans le schéma bloc du système présenté à la figure 1, pour définir une nouvelle application matérielle, seuls les containers et le fichier de configuration du gestionnaire d'application matérielle dépendent des tâches métier et vont être produits par l'éditeur de l'application matérielle. L'ensemble des autres composants est réutilisable sans modification.

Le système est capable d'accueillir tout container compatible avec le système d'exploitation et son système de gestion de containers associé.

Toute la partie métier des différentes applications matérielles se trouve donc reportée dans les containers et se trouve par conséquent sans impact sur le système sous-jacent.

Chaque container peut, indépendamment des autres, héberger des interpréteurs différents ou exécuter des binaires compilés compatibles avec ses capacités d'exécution. La seule limitation à la généricité de la solution est que le noyau du système sous-jacent doit être capable d'exécuter l'ensemble des appels systèmes réalisé par l'ensemble des containers.

L'objectif de généricité et de réutilisabilité de la solution est donc également atteint.

Le temps de démarrage d'un container est très réduit notamment d'une part du fait qu'il ne contient pas un système d'exploitation complet et d'autre part du fait qu'il utilise des systèmes de gestion très efficaces du système de fichier. L'objectif d'avoir un système ayant un faible impact sur le temps de démarrage des applications matérielles est donc également rempli.

Les technologies de containers s'appuient sur les capacités d'isolation de l'accès aux ressources des noyaux modernes. Ainsi un container donné n'a, par défaut, pas accès aux ressources manipulées par les autres containers, pas plus qu'à celles manipulées par le système d'exploitation qui les héberge. Ainsi, l'exploitation d'une faille de sécurité présente dans un des containers, n'affecte pas les autres containers donc, puisque l'application est correctement découpée, la portée de l'attaque s'en trouve alors limitée.

Si des ressources doivent être partagées, la configuration va l'indiquer explicitement. Il est donc possible, par configuration, de maitriser le partage des ressources du système d'exploitation et des containers entre eux. On constate donc que l'objectif de cloisonnement est atteint par l'utilisation de cette technique.

Les systèmes de gestion de containers, du fait que les containers utilisent tous un noyau unique sur une machine donnée, apportent une grande efficacité dans la gestion des ressources mémoire et puissance de calcul microprocesseur (CPU pour « Central Processing Unit » en langue anglaise).

De plus, le système de modèles de containers et la possibilité de les organiser hiérarchiquement permet une gestion très efficace de l'espace disque consommé par réutilisation des différents modèles.

Pour mieux bénéficier de cet avantage, il est intéressant de porter une attention particulière au découpage hiérarchique des modèles. Il est à noter que l'invention en elle-même n'a aucun contrôle sur ce découpage et que ces précautions vont être prises par les éditeurs des containers devant être déployés sur la solution proposée par l'invention.

L'ensemble de ces caractéristiques concernant l'optimisation de l'utilisation des ressources matérielles font de la solution proposée par l'invention, une solution particulièrement adaptée pour exploiter des applications matérielles en raison de la limitation et de la non-extensibilité de ces ressources matérielles dans le cadre de systèmes fermés.

Comme déjà vu précédemment, les systèmes de gestion de containers mutualisent l'utilisation d'un noyau unique entre les différents containers au lieu de faire appel à un système de virtualisation. De cette situation résulte le fait que, si le noyau peut interagir avec du matériel spécifiquement développé pour l'application matérielle, il est également possible de donner l'accès à ce matériel aux différents containers. Ceci règle le problème d'accès aux périphériques PCI-express, dont l'utilisation n'était pas possible au travers de l'utilisation de machines virtuelles, et aux périphériques USB dont l'utilisation au travers d'un hyperviseur reste problématique à ce jour.

En résumé, avec la solution proposée par l'invention, il devient donc possible de bénéficier d'une capacité d'isolation et de cloisonnement tout en résolvant les problématiques de temps de démarrage, d'optimisation de l'utilisation des ressources et d'accès aux cartes d'extension PCI-express, et ceci, de manière suffisamment générique pour pouvoir mutualiser cet effort de développement entre de nombreux clients.

Cette invention pourra donner lieu à des développements futurs tels l'ajout d'un niveau de sécurité supplémentaire par signature des modèles de containers, ou encore par adjonction de solution d'administration génériques pour application matérielle.

Un exemple de mise en œuvre du procédé de fabrication d'une application matérielle métier spécifique sécurisée et modulaire selon des modes de réalisation de l'invention, va maintenant être décrite.

Cette mise en œuvre des principes de la solution proposée par l'invention a été effectuée sur la déclinaison OEM du matériel « Trustway Proteccio ».

Voici, ci-dessous, une présentation succincte de la plateforme matérielle sur laquelle cette réalisation a été faite.

Application matérielle cryptographique, le HSM « Trustway » propose une plateforme matérielle ouverte offrant des fonctions cryptographiques de haut niveau de sécurité.

Elle permet aux éditeurs d'embarquer un environnement logiciel complet (système et applications).

Au-delà de la sécurité des opérations cryptographiques qu'elle apporte, l'offre « Trustway Proteccio » OEM permet la conception d'applications matérielles de sécurité matérielle complète sur la base d'une plateforme matérielle mise à disposition par la société Atos en marque blanche et personnalisable selon l'identité graphique de l'éditeur.

Outre des dispositifs de sécurité physique à la pointe de la technologie, les mécanismes de signature et de vérification du code apportent aux applications matérielles un niveau de sécurité inédit.

C'est pour la plateforme matérielle décrite ci-dessus, qu'é été réalisée une distribution propriétaire basée sur le système d'exploitation « Linux » permettant de déployer des containers offrant des services applicatifs capables de tirer parti du matériel cryptographique présent dans l'application matérielle.

La distribution proposée permet de déployer des containers avec pour principale contrainte que ceux-ci soient compatibles avec la version et la configuration du noyau du système d'exploitation de la distribution envisagée.

Cette distribution est basée sur le système d'exploitation « Linux » et elle est construite en utilisant un outil de construction dénommé « buildroot », outil destiné à produire des distributions « Linux » pour le monde du logiciel embarqué.

Le système de gestion de containers retenu pour cette réalisation est le système « Docker ».

Pour évaluer la surface d'attaque de la solution obtenue, les éléments suivants peuvent être observés. Le système se compose de 70 composants logiciels dont 3 sont spécifiques au fonctionnement de la solution « TrustWay Proteccio ». La taille occupée sur le disque par le système est d'environ 200 Mo.

La liste détaillée de l'ensemble des composants logiciels faisant partie de ce système d'exploitation sera décrite dans un fichier.

On notera dans la liste de ces composants l'absence d'interpréteurs Java, Perl, Python ou autres outils similaires dans notre distribution minimale. Celle-ci est cependant capable d'héberger des containers utilisant ces technologies.

L'empreinte disque des différents composants logiciels du socle est représentée sous forme graphique dans un fichier.

On notera qu'une grande partie de l'empreinte disque de la solution est justifiée par le choix de l'utilisation de la technologie « Docker ».

Un graphe de dépendance des différents composants sera réalisé et décrit dans un fichier.

La configuration du système d'exploitation a été durcie par nos experts en conformité avec l'état de l'art sur le sujet.

L'utilisation de « Docker » permet de bénéficier structurellement d'un cloisonnement lié cette technologie.

En effet, le modèle de sécurité « Docker » réduit au minimum les capacités d'interaction de chaque container avec les éléments privilégiés du système d'exploitation sous-jacent.

Par exemple, afin qu'un container donné puisse modifier la date du système d'exploitation sous-jacent, il faudra, par configuration lui conférer explicitement ce privilège.

Les containers hébergés sur une même machine sont également étanches entre eux.

Typiquement, deux containers souhaitant communiquer entre eux doivent le faire par le biais d'une interface réseau virtuelle (à configurer explicitement) et d'une architecture de communication de type client-serveur. Les fichiers et processus d'un container sont invisibles de l'ensemble des autres containers.

L'utilisation de cette technologie nous permet donc effectivement de bénéficier d'un cloisonnement des différents services métiers entre eux, faisant que la compromission d'un service donné par un agent malveillant ne compromettra pas nécessairement la sécurité de l'ensemble du système.

Afin de pouvoir utiliser le matériel cryptographique inclus dans la plateforme « Proteccio » OEM, il a été ajouté dans une distribution propriétaire des composants logiciels, faisant partie de l'offre standard « Proteccio » OEM.

Ces composants permettent de donner accès au matériel cryptographiques depuis le système d'exploitation par le biais d'un module noyau additionnel (le driver ou pilote) interfacé par le biais d'un dispositif « Linux ».

Par défaut, en raison du modèle de sécurité « Docker », cet appareil est inaccessible depuis l'intérieur des containers « Docker ». Cependant, une option discrétionnaire permet d'autoriser un container donné à avoir accès à ce dispositif.

On notera qu'avec ce modèle, un container souhaitant accéder au module cryptographique physique n'a pas besoin de posséder le pilote (car celui-ci est présent et mutualisé au niveau du système d'exploitation sous-jacent) mais uniquement de savoir interagir avec le dispositif « Linux », ce qui diminue le nombre de composants logiciels spécifiques à inclure dans le container.

On notera également que, en vertu du cloisonnement, tous les containers de l'application matérielle n'ont pas nécessairement accès au module cryptographique physique (car c'est un composant très sensible du point de vue de la sécurité), mais que cet accès se décide au cas par cas pour chaque container en fonction de ses besoins réels.

Un système de gestion du cycle de vie des containers « Docker » a été développé et inclus dans ce socle.

Ce système se base sur un fichier de configuration qui permet de décrire quels containers, réseaux virtuels et volumes de données doivent être créés pour faire fonctionner l'application matérielle.

Ce fichier permet également de décrire les différentes options permettant de paramétrer chacune de ces opérations.

Lors du démarrage de l'application matérielle, ce système de gestion des containers « Docker » se déclenche automatiquement et instancie, conformément au fichier de configuration, l'ensemble des containers réseaux virtuels et volumes de données nécessaire au fonctionnement de l'application matérielle.

Lors de l'arrêt de la machine, les opérations inverses sont réalisées par le gestionnaire, et les éléments cités ci-dessus (sauf les volumes de données) sont détruits.

On obtient ainsi, à chaque redémarrage, une application matérielle dont le code exécutable est exactement conforme à celui contenu dans les images de containers livrées avec l'application matérielle, les données utilisateurs étant toutes confinées dans les volumes de données.

Cette « remise à neuf » de l'ensemble du code de l'application matérielle augmente la résilience du système de manière très importante, puisqu'à chaque redémarrage, seules les données utilisateur ont pu varier par rapport au démarrage précédent.

Ce système est générique et ne fait aucune hypothèse sur les containers « Docker » ou les réseaux virtuels permettant de faire fonctionner l'application matérielle.

Le fichier de configuration de l'application matérielle et l'ensemble des images des containers « Docker » auquel il fait référence définissent entièrement le comportement de la partie métier de l'application matérielle.

Avec la solution proposée par l'invention, un éditeur d'application matérielle qui désire utiliser le matériel « Proteccio » OEM (y compris le matériel cryptographique propriétaire « TrustWay ») n'a donc à produire que les images « Docker » nécessaires et à rédiger le fichier de l'application matérielle, puis à installer ce fichier et les archives contenant les images, aux endroits spécifiés dans la distribution pour voir l'application matérielle fonctionner conformément à ses spécifications.

Le manuel d'utilisation de cette solution spécifie les formats de ces différents éléments et à quels emplacements respectifs ils doivent être installés pour réaliser une application matérielle sur la base de cette solution.

Afin d'élargir le périmètre de la solution, on peut produire des systèmes conceptuellement équivalents pour tout type d'application matérielle sur laquelle il est possible d'exécuter un système de gestion de container.

Enfin, il est à noter que le couple « Linux/Docker » n'est pas la seule solution possible pour mettre en œuvre cette solution, mais que d'autres systèmes de gestion de containers existent pour « Linux ». En outre, d'autres systèmes d'exploitation que « Linux » offrent également des solutions de gestion de container.

Il pourrait même être envisagé, de développer un système d'exploitation et/ou un système de gestion de containers propriétaire qui permettrait d'atteindre les mêmes objectifs.

Bien entendu, la présente invention n'est pas limitée aux exemples et au mode de réalisation décrits et représentés, mais elle est susceptible de nombreuses variantes accessibles à l'homme de l'art.

Un glossaire des termes techniques est joint dans la table n°1 suivante (les termes français étant notés avec les termes anglais portant la mention GB) :

**[Table 1]**

| | |
|---|---|
| • Application matérielle | Appareil informatique spécifiquement conçu pour exécuter un logiciel destiné à fournir un service informatique dédié de manière autonome. |
| • Appliance (GB) | |
| • Computer Appliance (GB) | |
| • Système d'exploitation | Un système d'exploitation est un ensemble de programmes qui dirige l'utilisation des ressources d'un ordinateur par des logiciels applicatifs. |
| • Operating System (GB) | |
| • O.S. | |
| • Logiciel applicatif | Un logiciel applicatif est, un programme directement utilisé pour réaliser une tâche. |
| • Machine virtuelle | Une machine virtuelle est un système informatique qui donne l'illusion d'un ordinateur physique permettant ainsi d'exécuter un système d'exploitation et des logiciels différents de ceux de la machine physique qui héberge le système. |
| | Plusieurs machines virtuelles peuvent s'exécuter simultanément sur une même machine physique. |
| • Hyperviseur | Un hyperviseur est une plate-forme de virtualisation qui permet à plusieurs systèmes d'exploitation de travailler sur une même machine physique en même temps. |
| • OEM | « Original Equipment Manufacturer » (GB) ou équipementier : Entreprise fabriquant des composants informatiques matériels, principalement pour le compte d'une autre entreprise. |
| • SSD | Un SSD, abréviation de « Solid State Drive » (GB) ou « mémoire à état solide » est un matériel informatique permettant le stockage persistant de données sur de la mémoire flash. Contrairement aux disques durs magnétiques, il ne comporte pas de pièces en mouvement. |
| • Architecture en micro-services | Style d'architecture d'application logicielle s'opposant à l'architecture monolithique. |
| • Surface d'attaque | Somme des différents points d'entrés par lesquels un utilisateur non autorisé pourrait potentiellement s'introduire dans un système informatique à des fins malveillantes. |
| | Minimiser le plus possible la surface d'attaque fait partie des mesures de sécurité intéressantes. |
| • Service métier | Fonction spécifique à un domaine d'application donné réalisée par un logiciel informatique. |
| • SDK | « Software Development Kit » (GB) ou kit de développement d'applications : ensemble de logiciels destinés à faciliter le développement d'applications pour une plateforme donnée. |
| • Driver system (GB) | Un système pilote est un programme informatique destiné à permettre à un autre programme (souvent un système d'exploitation) |
| • Système pilote | d'interagir avec un périphérique. En général, chaque périphérique a son propre pilote. Plus simplement, le pilote d'un périphérique donné est un logiciel qui explique au système d'exploitation comment utiliser ce périphérique. Ce logiciel est dédié à l'utilisation du périphérique qui lui correspond. |
| • Système Linux | Dans le système Linux divers fichiers spéciaux sont situées dans le répertoire /dev. Ces fichiers s'appellent des fichiers de périphérique ou « device » (GB) et se comportent différemment des fichiers ordinaires, ils permettent le plus souvent d'interagir avec le matériel de l'ordinateur (disque dur par exemple). |
| | Ces fichiers spéciaux constituent l'interface avec le pilote dédié à un matériel donné faisant partie du noyau Linux, pilote qui à son tour accède au matériel. |
| • Périphérique | Un périphérique informatique est un dispositif matériel connecté à un ordinateur et qui ajoute à ce dernier des fonctionnalités. Le périphérique ne se situe pas nécessairement à l'extérieur du boitier de l'ordinateur et peut même ne pas être physiquement visible. |
| • Socle | Système d'exploitation configuré de manière spécifique pour un usage donné destiné à être utilisé à de multiples reprises dans la même configuration. |
| • Conteneur ou container | Un « conteneur » ou « container » est un ensemble de processus qui sont isolés du reste du système d'exploitation. Il s'exécute à partir d'une image distincte qui fournit tous les fichiers nécessaires à la prise en charge des processus qu'il contient. En fournissant une image qui contient toutes les dépendances d'une application, le conteneur assure la portabilité et la cohérence de l'application sur divers environnements. Parmi les différents systèmes de gestion de containers existant, on peut citer notamment Docker, LXC, Solaris Containers, FreeBSD jails. |
| • Langage compilé | Dans un langage compilé, avant de pouvoir être exécuté, le code source d'un programme doit être traduit en un code « binaire » utilisant des instructions supportées par le microprocesseur de l'ordinateur qui va l'exécuter. Le programme en charge de cette traduction est appelé « compilateur ». Une fois compilé, le programme peut être exécuté un nombre arbitraire de fois sans nécessiter d'être traduit à nouveau. La présence du compilateur n'est donc pas forcément requise pour l'exécution du programme. |
| • Langage interprété | Dans un langage interprété, le code source du programme est exécuté par un logiciel appelé interpréteur. L'opération d'interprétation doit être réalisée autant de fois que le programme doit être exécuté. La présence de l'interpréteur est donc requise pour l'exécution du programme. |
| • Système de fichier en mémoire | Dans un système de fichier en mémoire, les fichiers sont stockés dans la mémoire vive de l'ordinateur au lieu d'être enregistrés dans une zone de stockage persistante telle qu'un disque dur magnétique ou une mémoire flash de type SSD. |
| | Lors du redémarrage de l'ordinateur, l'ensemble des fichiers conservés dans un « système de fichier en mémoire » sont perdus. |
| • Logiciel embarqué | Un logiciel embarqué est un logiciel permettant de faire fonctionner une machine, équipée d'un ou plusieurs microprocesseurs, afin de réaliser une tâche spécifique avec une intervention humaine limitée. Ceux-ci couvrent trois principales fonctionnalités : |
| | • Traitement lié au fonctionnement de la machine. |
| | • Communication avec un autre calculateur ou « Machine to Machine » (GB). |
| | • Communication avec l'homme |
| • Noyau | Le noyau d'un système d'exploitation est une des parties principales du système d'exploitation. Il gère les ressources de l'ordinateur et permet aux différents composants, matériels et logiciels, de communiquer entre eux. |
| • Kernel (GB) | |
| • Durcissement | En informatique, le durcissement est le processus destiné à sécuriser un système. La démarche consiste principalement à réduire à l'indispensable les objets (logiciels, bibliothèques logicielles, outils) installés, ainsi qu'à éliminer les utilisateurs et les droits non indispensables, tout en conservant les fonctionnalités requises. |
| • Hardening (GB) | |
| | Le principe sous-jacent est la réduction de la surface d'attaque possible, en considérant que tout objet installé est potentiellement une source de vulnérabilité. La réduction du nombre d'objets installés réduit donc le nombre de failles possibles, pour un système donné. |
| • Périphérique USB | Matériel périphérique d'un ordinateur connectable par USB « bus série universel » ou « Universal Serial Bus »(GB), une norme relative à un bus informatique permettant de connecter divers types d'appareils le plus souvent situés à l'extérieur de l'ordinateur. |
| • Périphérique PCI-Express | Matériel périphérique d'un ordinateur connectable par PCI-Express, une norme qui spécifie un bus local série (« bus PCI express ») et un connecteur permettant de relier des cartes d'extension sur la carte mère d'un ordinateur. |
| • Modèle de conteneur | Un modèle de conteneur parfois aussi appelé image est un ensemble de fichiers permettant de créer de multiples conteneurs identiques. C'est le contenu du modèle qui définit les fonctionnalités des conteneurs qui seront créés à partir ce modèle. |
| • HSM (GB) | « module matériel de sécurité » ou « Hardware Security Module » |
| • Module matériel de sécurité | (GB) est un appareil considéré comme pratiquement inviolable et offrant des fonctions cryptographiques. Il s'agit d'un matériel électronique offrant un service de sécurité qui consiste à générer, stocker et protéger des clefs cryptographiques. |

## Revendications

1. Procédé de fabrication d'une application matérielle métier spécifique sécurisée et modulaire, comprenant : une étape de sélection : d'un ordinateur matériel intégré dans un boîtier fermé qui l'isole de l'extérieur de manière à rendre les ressources matérielles de cet ordinateur matériel structurellement non extensibles car rendues inaccessibles sans endommagement depuis l'extérieur du boîtier, d'un système d'exploitation à gérer des containers de manière générique et minimaliste, associé à l'ordinateur, d'un kit de développement d'applications, associé au système d'exploitation et à l'ordinateur, des modèles de containers, des composants logiciels métiers spécifiques, une étape de déploiement des composants logiciels métiers spécifiques dans des containers instanciés sur la base des modèles de containers, le système d'exploitation, apte à gérer des containers de manière générique et minimaliste, comprend : un mécanisme générique de gestion d'un nombre non prédéterminé de containers, comprenant : une fonction d'installation des modèles de containers, une fonction de mise à jour des modèles de containers, une fonction de création d'un container par instanciation d'un modèle de container, une fonction de démarrage d'un container, une fonction d'arrêt d'un container, une fonction de destruction d'un container, un mécanisme de configuration dudit mécanisme générique de gestion des containers, apte à configurer pour une application matérielle donnée une liste des containers à gérer, et un ensemble des composants additionnels requis pour le fonctionnement des containers à gérer; ledit mécanisme générique de gestion des containers comprend uniquement : ladite fonction d'installation des modèles de containers, ladite fonction de mise à jour des modèles de containers, ladite fonction de création d'un container par instanciation d'un modèle de container, ladite fonction de démarrage d'un container, ladite fonction d'arrêt d'un container, ladite fonction de destruction d'un container.

2. Procédé de fabrication d'une application matérielle métier spécifique sécurisée et modulaire selon la revendication 1, dans lequel ledit mécanisme de configuration dudit mécanisme générique de gestion des containers, est apte à configurer uniquement : ladite liste des containers à gérer, ledit ensemble des composants additionnels requis pour le fonctionnement des containers à gérer.

3. Procédé de fabrication d'une application matérielle métier spécifique sécurisée et modulaire selon l'une quelconque des revendications 1 à 2, dans lequel ledit ensemble des composants additionnels requis pour le fonctionnement des containers à gérer, comprend : des réseaux virtuels, et/ou des volumes de données, et/ou l'accès à des composants matériels métiers spécifiques avec les droits d'accès des différents containers auxdits composants.

4. Procédé de fabrication d'une application matérielle métier spécifique sécurisée et modulaire selon l'une quelconque des revendications précédentes, dans lequel le nombre des composants logiciels formant ledit système d'exploitation est inférieur à 100 composants logiciels, et de préférence est compris entre 50 et 100 composants logiciels.

5. Procédé de fabrication d'une application matérielle métier spécifique sécurisée et modulaire selon l'une quelconque des revendications précédentes, dans lequel ledit ordinateur matériel, intégré dans un boîtier fermé qui l'isole de l'extérieur de manière à rendre les ressources matérielles de cet ordinateur matériel structurellement non extensibles car rendues inaccessibles sans endommagement depuis l'extérieur du boîtier, inclut déjà le ou les composants matériels métiers spécifiques éventuels.

6. Procédé de fabrication d'une application matérielle métier spécifique sécurisée et modulaire selon la revendication 5, dans lequel le ou l'un des composants matériels métiers spécifiques est une carte cryptographique qui est avantageusement apte à réaliser / authentifier les signatures électroniques et/ou à réaliser des chiffrements / déchiffrements de données.

7. Procédé de fabrication d'une application matérielle métier spécifique sécurisée et modulaire selon l'une quelconque des revendications précédentes, dans lequel ledit ordinateur matériel comprend au moins : un ou plusieurs microprocesseurs, une ou plusieurs mémoires vives, une ou plusieurs mémoires persistantes, une ou plusieurs interfaces réseau.

8. Procédé de fabrication d'une application matérielle métier spécifique sécurisée et modulaire selon la revendication 7, dans lequel la capacité globale de la ou des mémoires vives est comprise entre 5 et 30Go, de préférence comprise entre 10 et 20Go, et la capacité globale de la ou des mémoires persistantes est comprise entre 50 et 500Go, de préférence comprise entre 100 et 300Go.

9. Procédé de fabrication d'une application matérielle métier spécifique sécurisée et modulaire selon l'une quelconque des revendications précédentes, dans lequel ledit déploiement des composants logiciels métiers spécifiques est organisé en une architecture de micro-services.

10. Procédé de fabrication d'une application matérielle métier spécifique sécurisée et modulaire selon l'une quelconque des revendications précédentes, dans lequel des composants logiciels additionnels de sécurité sont implémentés dans ledit système d'exploitation, et/ou des configurations spécifiques augmentant le niveau de sécurité sont implémentées dans ledit système d'exploitation.

11. Procédé de fabrication d'une application matérielle métier spécifique sécurisée et modulaire selon l'une quelconque des revendications précédentes, dans lequel: des matériels métiers dédiés sont implémentés dans l'application matérielle métier spécifique, des composants logiciels additionnels de pilotage des matériels métiers dédiés sont implémentés dans ledit système d'exploitation.

12. Procédé de fabrication d'une application matérielle métier spécifique sécurisée et modulaire selon l'une quelconque des revendications précédentes, dans lequel: la configuration de toute la partie logicielle de l'application matérielle métier spécifique est durcie pour améliorer sa sécurité, et/ou la configuration du système d'exploitation est durcie pour améliorer sa sécurité.

13. Procédé de fabrication d'une application matérielle métier spécifique sécurisée et modulaire selon l'une quelconque des revendications précédentes, dans lequel: le système d'exploitation est un système d'exploitation Linux, le système de gestion des containers est le système Docker.

## Patentansprüche

1. Verfahren zum Herstellen einer materiellen, geschäftsspezifischen, gesicherten und modularen Anwendung, umfassend: einen Schritt eines Auswählens: eines materiellen Computers, welcher in ein geschlossenes Gehäuse integriert ist, welches ihn von der Umgebung derart isoliert, dass die materiellen Ressourcen dieses materiellen Computers strukturell nicht erweiterbar sind, da sie ohne Beschädigung von außerhalb des Gehäuses nicht zugänglich sind, eines Betriebssystems zum Betreiben von Containern in generischer und minimalistischer Weise, welches dem Computer zugeordnet ist, eines Entwicklungskits für Anwendungen, welches dem Betriebssystem des Computers zugeordnet ist, von Modellen von Containern, von geschäftsspezifischen logischen Komponenten, einen Schritt eines Bereitstellens der geschäftsspezifischen logischen Komponenten zu instanziierten Containern auf der Grundlage der Modelle von Containern,
wobei das Betriebssystem, welches zum Betreiben von Containern in generischer und minimalistischer Weise eingerichtet ist, umfasst: einen generischen Mechanismus zum Verwalten einer nicht vorbestimmten Anzahl von Containern, umfassend: eine Funktion zum Installieren der Modelle von Containern, eine Funktion zum Aktualisieren der Modelle von Containern, eine Funktion zum Erzeugen eines Containers durch Instanziieren eines Modells eines Containers, eine Funktion zum Starten eines Containers, eine Funktion zum Stoppen eines Containers, eine Funktion zum Zerstören eines Containers, einen Mechanismus zur Konfiguration des generischen Mechanismus zum Verwalten der Container, welcher in der Lage ist für eine gegebene materielle Anwendung zu konfigurieren: eine Liste von zu verwaltenden Containern und eine Anordnung von zusätzlichen Komponenten, welche für die Funktion der zu verwaltenden Container benötigt werden; wobei der generische Mechanismus zum Verwalten der Container lediglich umfasst: die Funktion zum Installieren der Modelle von Containern, die Funktion zum Aktualisieren der Modelle von Containern, die Funktion zum Erzeugen eines Containers durch Instanziieren eines Modells eines Containers, die Funktion zum Starten eines Containers, die Funktion zum Stoppen eines Containers, die Funktion zum Zerstören eines Containers.

2. Verfahren zum Herstellen einer materiellen, geschäftsspezifischen, gesicherten und modularen Anwendung nach Anspruch 1, wobei der Mechanismus zur Konfiguration des generischen Mechanismus zum Verwalten von Containern in der Lage ist, lediglich zu konfigurieren: die Liste von zu verwaltenden Containern, die Anordnung von zusätzlichen Komponenten, welche für die Funktion der zu verwaltenden Container benötigt werden.

3. Verfahren zum Herstellen einer materiellen, geschäftsspezifischen, gesicherten und modularen Anwendung nach einem der Ansprüche 1 bis 2, wobei die Anordnung der zusätzlichen Komponenten, welche für die Funktion der zu verwaltenden Container benötigt werden, umfasst: virtuelle Netzwerke und/oder Datenvolumen und/oder den Zugriff auf materielle, geschäftsspezifische Komponenten mit den Zugriffsrechten der verschiedenen Container auf diese Komponenten.

4. Verfahren zum Herstellen einer materiellen, geschäftsspezifischen, gesicherten und modularen Anwendung nach einem der vorhergehenden Ansprüche, wobei die Anzahl der logischen Komponenten, welche das Betriebssystem bilden, kleiner als 100 logische Komponenten ist, vorzugsweise zwischen 50 und 100 logische Komponenten beträgt.

5. Verfahren zum Herstellen einer materiellen, geschäftsspezifischen, gesicherten und modularen Anwendung nach einem der vorhergehenden Ansprüche, wobei der materielle Computer, welcher in ein geschlossenes Gehäuse integriert ist, welches ihn von der Umgebung derart isoliert, dass die materiellen Ressourcen dieses materiellen Computers strukturell nicht erweiterbar sind, da sie ohne Beschädigung von außerhalb des Gehäuses nicht zugänglich sind, bereits die mögliche/n spezifische/n materielle/n Komponente/n umfasst.

6. Verfahren zum Herstellen einer materiellen, geschäftsspezifischen, gesicherten und modularen Anwendung nach Anspruch 5, wobei die eine oder die mehreren geschäftsspezifische/n Komponente/n eine kryptografische Karte ist, welche vorzugsweise dazu in der Lage ist, die elektronischen Signaturen zu erzeugen/auszuführen und/oder Verschlüsselungen/Entschlüsselungen von Daten auszuführen.

7. Verfahren zum Herstellen einer materiellen, geschäftsspezifischen, gesicherten und modularen Anwendung nach einem der vorhergehenden Ansprüche, wobei der materielle Computer wenigstens umfasst: einen oder mehrere Mikroprozessoren, einen oder mehrere Arbeitsspeicher, einen oder mehrere persistente Speicher, eine oder mehrere Netzwerk-Schnittstellen.

8. Verfahren zum Herstellen einer materiellen, geschäftsspezifischen, gesicherten und modularen Anwendung nach Anspruch 7, wobei die globale Kapazität des oder der Arbeitsspeicher/s zwischen 5 und 30 GB, vorzugsweise zwischen 10 und 20 GB, beträgt, und die globale Kapazität des oder der persistenten Speicher/s zwischen 50 und 500 GB, vorzugsweise zwischen 100 und 300 GB, beträgt.

9. Verfahren zum Herstellen einer materiellen, geschäftsspezifischen, gesicherten und modularen Anwendung nach einem der vorhergehenden Ansprüche, wobei das Bereitstellen von logischen, geschäftsspezifischen Komponenten in einer Architektur von Mikrodiensten organisiert ist.

10. Verfahren zum Herstellen einer materiellen, geschäftsspezifischen, gesicherten und modularen Anwendung nach einem der vorhergehenden Ansprüche, wobei zusätzliche logische Sicherheitskomponenten in dem Betriebssystem implementiert sind und/oder spezifische Komponenten, welche das Sicherheitsniveau erhöhen, in dem Betriebssystem implementiert sind.

11. Verfahren zum Herstellen einer materiellen, geschäftsspezifischen, gesicherten und modularen Anwendung nach einem der vorhergehenden Ansprüche, wobei: dedizierte Geschäftsmaterialien in der materiellen, geschäftsspezifischen Anwendung implementiert sind, zusätzliche logische Komponenten zur Steuerung der dedizierten Geschäftsmaterialien in dem Betriebssystem implementiert sind.

12. Verfahren zum Herstellen einer materiellen, geschäftsspezifischen, gesicherten und modularen Anwendung nach einem der vorhergehenden Ansprüche, wobei: die Konfiguration des gesamten logischen Teils der materiellen, geschäftsspezifischen Anwendung gehärtet ist, um seine Sicherheit zu verbessern, und/oder die Konfiguration des Betriebssystems gehärtet ist, um seine Sicherheit zu verbessern.

13. Verfahren zum Herstellen einer materiellen, geschäftsspezifischen, gesicherten und modularen Anwendung nach einem der vorhergehenden Ansprüche, wobei das Betriebssystem ein Linux-Betriebssystem ist, das System zum Verwalten der Container das Docker-System ist.

## Claims

1. Method for manufacturing a secure and modular business-specific hardware application, comprising: a step of selecting: a computer integrated into a closed casing that isolates it from the outside so as to make the hardware resources of this computer structurally non-expandable because they cannot be accessed from the outside of the casing without causing damage, an operating system to manage containers in a generic and minimalist manner, associated with the computer, an application development kit, associated with the operating system and the computer, container templates, business-specific software components, a step of deploying the business-specific software components in containers instantiated based on container templates, the operating system, capable of managing containers in a generic and minimalist manner, comprises: a generic mechanism for managing an unpredetermined number of containers, comprising: a container template installation function, a container template update function, a container creation function by instantiating a container template, a container start function, a function for stopping a container, a function for destroying a container, a mechanism for configuring said generic container management mechanism, capable of configuring for a given hardware application: a list of the containers to be managed, and a set of additional components required for the operation of the containers to be managed; said generic container management mechanism comprises only: said container template installation function, said container template update function, said container creation function by instantiating a container template, said container start function, said function for stopping a container, said function for destroying a container.

2. Method for manufacturing a secure and modular business-specific hardware application according to Claim 1, wherein said mechanism for configuring said generic container management mechanism is able to configure only: said list of containers to be managed, said set of additional components required for the operation of the containers to be managed.

3. Method for manufacturing a secure and modular business-specific hardware application according to either one of Claims 1 or 2, wherein said set of additional components required for the operation of the containers to be managed comprises: virtual networks, and/or data volumes, and/or access to business-specific hardware components with the access rights of the different containers to said components.

4. Method for manufacturing a secure and modular business-specific hardware application according to any one of the preceding claims, wherein the number of software components forming said operating system is less than 100 software components, and preferably is between 50 and 100 software components.

5. Method for manufacturing a secure and modular business-specific hardware application according to any one of the preceding claims, wherein said computer, integrated into a closed casing that isolates it from the outside so as to make the hardware resources of this computer structurally non-expandable because they cannot be accessed from the outside of the casing without causing damage, already includes any potential business-specific hardware component(s).

6. Method for manufacturing a secure and modular business-specific hardware application according to Claim 5, wherein the or one of the business-specific hardware components is a cryptographic card that is advantageously able to perform/authenticate electronic signatures and/or perform encryption/decryption of data.

7. Method for manufacturing a secure and modular business-specific hardware application according to any one of the preceding claims, wherein said computer comprises at least: one or more microprocessors, one or more RAMs, one or more persistent memories, one or more network interfaces.

8. Method for manufacturing a secure and modular business-specific hardware application according to Claim 7, wherein the overall capacity of the RAM(s) is between 5 and 30GB, preferably between 10 and 20GB, and the overall capacity of the persistent memory/memories is between 50 and 500GB, preferably between 100 and 300GB.

9. Method for manufacturing a secure and modular business-specific hardware application according to any one of the preceding claims, wherein said deployment of the business-specific software components is organised in a micro-services architecture.

10. Method for manufacturing a secure and modular business-specific hardware application according to any one of the preceding claims, wherein: additional security software components are implemented in said operating system, and/or specific configurations increasing the security level are implemented in said operating system.

11. Method for manufacturing a secure and modular business-specific hardware application according to any one of the preceding claims, wherein: dedicated business hardware is implemented in the business-specific hardware application, additional software components for controlling the dedicated business hardware are implemented in said operating system.

12. Method for manufacturing a secure and modular business-specific hardware application according to any one of the preceding claims, wherein: the configuration of the entire software portion of the business-specific hardware application is hardened to improve its security, and/or the configuration of the operating system is hardened to improve its security.

13. Method for manufacturing a secure and modular business-specific hardware application according to any one of the preceding claims, wherein: the operating system is a Linux operating system, the container management system is the Docker system.
